# EUROPÄISCHE PATENTSCHRIFT

(11) **EP 2 122 211 B1**
(45) Veröffentlichungstag und Bekanntmachung des Hinweises auf die Patenterteilung: **03.04.2013**
(21) Anmeldenummer: 08706798.9
(22) Anmeldetag: 24.01.2008
(51) Int. Cl.: F16J 9/26, F16J 9/12

(54) **KOLBENRING**
PISTON RING
SEGMENT DE PISTON

(30) Priorität: 17.02.2007 DE 102007007965
(43) Veröffentlichungstag der Anmeldung: 25.11.2009
(73) Patentinhaber: Federal-Mogul Burscheid GmbH, 51399 Burscheid (DE)
(72) Erfinder: ESSER, Johannes, 51519 Odenthal (DE); BRILLERT, Hans-Rainer, 51399 Burscheid (DE)
(74) Vertreter: Döpp, Ludger
(86) Internationale Anmeldenummer: PCT/DE2008/000130
(87) Internationale Veröffentlichungsnummer: WO 2008/098544

(56) Entgegenhaltungen:
- EP-A- 1 132 663
- DE-B3- 10 359 802
- US-A- 4 106 782

## Beschreibung

Die Erfindung betrifft einen Kolbenring gemäß gattungsbildendem Teil des ersten Patentanspruchs.

Der DE 103 59 802 B3 ist ein Kolbenring sowie ein Verfahren zur Herstellung desselben zu entnehmen. Der Kolbenring beinhaltet eine mit einem Laufflächenprofil versehene Lauffläche sowie eine obere und eine untere Flankenfläche, wobei zumindest die Lauffläche mit einer Aufdampfschicht versehen ist, dergestalt, dass ein Teilbereich der Lauffläche mit einer entfernbaren Abdeckung versehen ist, so dass nach Erzeugung der Aufdampfschicht und Entfernung der Abdeckung eine im Wesentlichen scharfkantige Laufkante zwischen der Lauffläche und zumindest einer der Flankenflächen gegeben ist.

Die US 4,106,782 offenbart einen mit Keramikmaterial beschichteten Kolbenring für eine Brennkraftmaschine. Die äußere Umfangsfläche des Kolbenrings wird zunächst einmal mit einer Kammerung versehen. Die Lauffläche einschließlich der Kammerung wird anschließend mit einer Nickel-Aluminitbeschichtung durch Sprühen beschichtet. Im Anschluss daran wird auf diese erste Schicht eine zweite Keramikschicht aufgebracht. Zur Erzeugung einer definierten Laufflächenform wird die Lauffläche dergestalt bearbeitet, dass aussschließlich Beschichtungsmaterial innerhalb der Kammerung verbleibt, während die übrigen Laufflächenbereiche dem Grundmaterial des Kolbenrings entsprechen.

Durch die EP 1 132 663 A2 ist ein Kolbenring mit einer Verschleißschutzschicht bekannt geworden, die nach dem PVD- oder CVD-Verfahren aufgebracht wurde. Die Verschleißschutzschicht besteht im Wesentlichen aus den Elementen Titan, Bor und Stickstoff, wobei die Schichtdicke max. 100 µm beträgt. Der Ti-Gehalt liegt zwischen 50 und 60 Atom-%, der Stickstoffgehalt liegt zwischen 20 und 50 Atom-% und der Borgehalt liegt zwischen 1 und 30 Atom-%.

Zur Erzielung eines guten Ölverbrauchs und Blowby-Verhaltens ist es erforderlich, dass die untere Kante am Übergang von der Ringlauffläche zur Ringflanke möglichst scharfkantig ausgeführt wird. Bei beschichteten Kolbenringen stellt sich diese Forderungen abhängig von der Schichtdicke der Laufflächenschicht, als zunehmend schwierig dar.

Bekannte Lösungen für dieses Problem sind einseitig und voll gekammerte Ringe, bei denen die Schicht nur im mittleren bis oberen bzw. nur im mittleren Bereich der Lauffläche eingelegt ist. Die entscheidende Kante wird durch den Grundwerkstoff gebildet und lässt sich dadurch vollständig scharfkantig darstellen.

Der Erfindung liegt die Aufgabe zugrunde, den Stand der Technik dahingehend weiterzubilden, dass unter Beibehaltung einer möglichst scharfkantigen unteren Kante am Kolbenring eine Laufflächenschicht reduzierter Schichtdicke aufgebracht werden kann, um auf diese Weise eine erhöhte Ausbruchsicherheit in diesem Bereich zu gewährleisten.

Diese Aufgabe wird dadurch gelöst, dass die gesamte Lauffläche mit mindestens einer PVD-Schicht derart versehen ist, dass der gekammerte Bereich der Lauffläche nur partiell ausgefüllt ist, wodurch vorstehende tragende Bereiche an den Rändern der Lauffläche gebildet sind und die Kammerung im Betriebszustand ein Reservoir für Schmieröl bildet, wobei in Abhängigkeit von der Ausbildung der Kammerung der jeweilige Randbereich mit einer gegenüber der Schichtdicke der Kammerung (7) reduzierten Schichtdicke versehen ist.

Vorteilhafte Weiterbildungen des Erfindungsgegenstandes sind den zugehörigen Unteransprüchen zu entnehmen.

Bei der PVD-Beschichtung (Physical Vapour Deposition) handelt es sich um ein Verfahren, bei dem die Beschichtung der Lauffläche des Kolbenringes durch Abscheidung aus der Dampfphase erfolgt. Das abzuscheidende Beschichtungsmaterial liegt dabei als ionisierter Teilchenstrom vor.

Erfindungsgemäß wird eine spezielle Ausführung von gekammerten Kolbenringen vorgeschlagen, bei der die Kammer nicht mit den herkömmlichen Verschleißschutzwerkstoffen vollständig ausgefüllt wird, sondern ausschließlich eine PVD-Schicht, beispielsweise auf Basis von Nitriden, z.B. CrN und/oder CrON, auf die Lauffläche (samt Kammerung) aufgebracht wird.

Aufgrund des hohen Verschleißwiderstandes dieser PVD-Schichten ist es möglich, die Kammer nur bis zu einer Höhe von ca. 10 bis 50 µm aufzufüllen. Die zunächst gleichmäßig, d.h. mit gleicher Schichtdicke, auf der gesamten Lauffläche aufgebrachte PVD-Schicht wird nun außerhalb der Kammerung um einen definierten Betrag abgeschliffen, beispielsweise auf eine Restschichtdicke von 1 bis 10 µm. Durch diese Maßnahme steht der gekammerte Bereich der Lauffläche radial nun geringfügig zurück. Aus diesem Grund kommt die PVD-Beschichtung der Kammerung über eine gewisse Einlaufzeit nicht mit der Zylinderwand im Eingriff und der Freiraum bildet ein Reservoir für Schmieröl.

Von besonderem Vorteil ist, wenn die PVD-Schicht auf Basis von Nitriden der Elemente der Gruppe IV b bis VI b des Periodensystems gebildet wird. Dies kann wahlweise mit Zugabe folgender Elemente, einzeln oder in Kombination, erfolgen: Al, Si, C, O.

Aufgrund der schmalen vorstehenden, d.h. tragenden Bereiche an den Rändern der Lauffläche wirkt der Kolbenring über einen bestimmten Einlaufzeitraum mit deutlich erhöhter Flächenpressung mit der Zylinderwand zusammen, so dass der Ölverbrauch in dieser Phase gesenkt werden kann.

Erst nach Abschluss der Einlaufphase und vollständigem Abtrag der Schicht auf den zunächst vorstehenden Randbereichen sowie der optimalen Formanpassung der Lauffläche an die Zylinderwand kommt der mit der PVD-Schicht versehene gekammerte Bereich der Lauffläche zur Anlage an die Zylinderwand.

Der Erfindungsgegenstand ist anhand eines Ausführungsbeispiels in der Zeichnung dargestellt und wird wie folgt beschrieben. Es zeigen:
- Figur 1: gekammerter Kolbenring mit einer Laufflächenbeschichtung;
- Figur 2: Kolbenring gemäß Figur 1 nach seiner Fertigbearbeitung;
- Figur 3: Kolbenring gemäß Figur 1 nach seinem Einlaufverhalten.

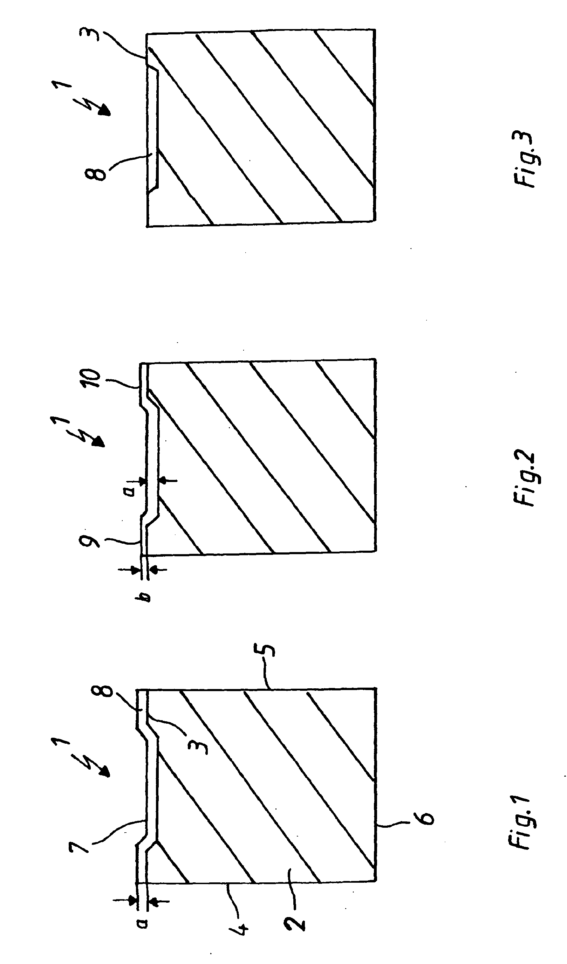

Figur 1 zeigt einen Kolbenring 1 im Querschnitt, mit einem Grundkörper 2, der eine Lauffläche 3, eine obere 4 und eine untere Flankenfläche 5 sowie eine innere Umfangsfläche 6 aufweist. Im Bereich der Lauffläche 3 ist eine Kammerung 7 eingearbeitet. Die Lauffläche 3 samt Kammerung 7 wird mit einer PVD-Deckschicht 8, in diesem Beispiel auf Basis von CrN, versehen. Aufgrund der Abscheideeigenschaft von PVD-Beschichtungen bildet die Deckschicht 8 die darunter liegende Kontur von Lauffläche 3 und Kammerung 7 exakt ab. Erkennbar ist, dass die Kammerung 7 nur partiell mit der PVD-Schicht 8 gefüllt ist. Die Schichtdicke a der PVD-Deckschicht 8 ist somit sowohl in den Randbereichen 8,9 als auch innerhalb der Kammerung 7 gleich. Sie hat in diesem Beispiel eine Dicke von 40 µm.

Figur 2 zeigt den Kolbenring 1 gemäß Figur 1 nach seiner Fertigstellung. Die in Figur 1 erkennbare Schichtdicke a, über die gesamte Lauffläche 3 und die Kammerung 7 gesehen, wurde so verändert, dass sich, durch Abschleifen der Randbereiche 9,10, eine gegenüber der Schichtdicke a der Kammerung 7 reduzierte Schichtdicke b einstellt. Da die Kammerung 7 nur partiell ausgefüllt ist, verbleibt für den Betriebszustand hier ein Reservoir für Schmieröl. In diesem Beispiel soll die ursprüngliche in Figur 1 dargestellte Schichtdicke von 40 µm in den Randbereichen 9,10 auf 10 µm abgeschliffen werden.

Figur 3 zeigt den Betriebszustand des Kolbenringes 1, und zwar nach seiner Einlaufphase. Die in Figur 2 erkennbaren Randbereiche 9,10 sind nun abgetragen, so dass nach der optimalen Formanpassung der Lauffläche 3 an eine nicht weiter dargestellte Zylinderwand nun die mittlere PVD-Deckschicht 8 zum Eingriff mit der Zylinderwand gelangt.

## Patentansprüche

1. Kolbenring, mit einem Grundkörper, der eine mit mindestens einer mit einer Verschleißschutzschicht gefüllten Kammerung (7) versehene Lauffläche (3), eine obere (4) und eine untere Flankenfläche (5) sowie eine innere Umfangsfläche (6) aufweist, **dadurch gekennzeichnet, dass** die gesamte Lauffläche (3) mit mindestens einer PVD-Schicht (8) derart versehen ist, dass der gekammerte Bereich der Lauffläche (3) nur partiell ausgefüllt ist, wodurch vorstehende tragende Bereiche an den Rändern der Lauffläche (3) gebildet sind und die Kammerung (7) im Betriebszustand ein Reservoir für Schmieröl bildet, wobei in Abhängigkeit von der Ausbildung der Kammerung (7) der jeweilige Randbereich (9,10) mit einer gegenüber der Schichtdicke (a) der Kammerung (7) reduzierten Schichtdicke (b) versehen ist.

2. Kolbenring nach Anspruch 1, **dadurch gekennzeichnet, dass** die PVD-Schicht (8) kammerungsseitig eine Schichtdicke (a) von 10 bis 50 µm und randbereichsseitig (9,10) eine Schichtdicke (b) von 1 bis 10 µm aufweist.

3. Kolbenring nach Anspruch 1 oder 2, **dadurch gekennzeichnet, dass** die PVD-Schicht (8) auf Basis von CrN, CrON ausgebildet ist.

4. Kolbenring nach Anspruch 1 oder 2, **dadurch gekennzeichnet, dass** die PVD-Schicht (8) auf Basis von Nitriden der Elemente der Gruppen IV b bis VI b des Persiodensystems mit oder ohne Zusatz von Al und/oder Si und/oder C und/oder O besteht.

## Claims

1. A piston ring comprising a base body which comprises a bearing surface (3) provided with at least one chambering (7) that is filled with a protection layer against wear, an upper (4) and a lower flank surface (5) as well as an inner circumferential surface (6), **characterized in that** the entire bearing surface (3) is provided with at least one PVD layer (8) such that the chambered portion of the bearing surface (3) is only partially filled up, whereby protuberant supporting portions are formed at the edges of the bearing surface (3) and the chambering (7) forms a reservoir of lubricating oil in the operating state, wherein in dependence on the design of the chambering (7), the respective edge portion (9, 10) is provided with a layer thickness (b) which is reduced with respect to the layer thickness (a) of the chambering (7).

2. A piston ring according to claim 1, **characterized in that** the PVD layer (8) comprises a layer thickness (a) comprised between 10 and 50 µm on the side of the chambering and a layer thickness (b) comprised between 1 and 10 µm on the side of the edge portions.

3. A piston ring according to claim 1 or 2, **characterized in that** the PVD layer (8) is formed on the base of CrN, CrON.

4. A piston ring according to claim 1 or 2, **characterized in that** the PVD layer (8) is formed on the base of nitrides of the elements belonging to the groups IV b through VI b of the classification of elements with or without addition of Al and/or Si and/or C and/or O.

## Revendications

1. Segment de piston ayant un corps de base qui comprend une surface de roulement (3) munie d'au moins un chambrage (7) qui est rempli d'une couche de résistance à l'usure, une surface de flanc supérieure (4) et inférieure (5) ainsi qu'une surface circonférentielle intérieure (6), **caractérisé en ce que** la surface de roulement (3) entière est munie d'au moins une couche en PVD (8) de sorte que la partie chambrée de la surface de roulement (3) n'est remplie que partiellement, par quoi des parties portantes et faisant saillie sont formées aux bords de la surface de roulement (3) et le chambrage (7) forme un réservoir d'huile lubrifiante en état de marche, la partie de bord respective (9, 10) étant munie d'une épaisseur de couche (b) qui est réduite par rapport à l'épaisseur de couche (a) du chambrage (7) en fonction de la configuration du chambrage (7).

2. Segment de piston selon la revendication 1, **caractérisé en ce que** la couche en PVD (8) comprend une épaisseur de couche (a) comprise entre 10 et 50 µm du côté du chambrage et une épaisseur de couche (b) comprise entre 1 et 10 µm du côté des parties de bord (9, 10).

3. Segment de piston selon la revendication 1 ou la revendication 2, **caractérisé en ce que** la couche en PVD (8) est formée à base de CrN, CrON.

4. Segment de piston selon la revendication 1 ou la revendication 2, **caractérisé en ce que** la couche en PVD (8) est formée à base de nitrures des éléments des groupes IV b à VI b de la classification périodique des éléments avec ou sans addition de Al et/ou de Si et/ou de C et/ou de O.
